**Europäisches Patentamt**

**European Patent Office**

**Office européen des brevets**

(19)

(11) Veröffentlichungsnummer: **0 213 304 B1**

(12) **EUROPÄISCHE PATENTSCHRIFT**

(45) Veröffentlichungstag der Patentschrift:
**20.09.89**

(21) Anmeldenummer: 86108558.7

(22) Anmeldetag: **23.06.86**

(51) Int. Cl.⁴: **G01N 21/37**

(54) Pneumatischer Detektor für NDIR-Gasanalysatoren.

(30) Priorität: 28.06.85 DE 8518894 U

(43) Veröffentlichungstag der Anmeldung:
**11.03.87 Patentblatt 87/11**

(45) Bekanntmachung des Hinweises auf die Patenterteilung:
**20.09.89 Patentblatt 89/38**

(84) Benannte Vertragsstaaten:
**BE CH DE FR GB IT LI NL SE**

(56) Entgegenhaltungen:
**EP-A- 0 093 939
DE-A- 2 325 502
DE-A- 3 321 360
DE-B- 1 017 385
US-A- 4 336 453**

(73) Patentinhaber: **Siemens Aktiengesellschaft,
Wittelsbacherplatz 2, D-8000 München 2(DE)**

(72) Erfinder: **Weinel, Johann, Strassburger Strasse 13,
D-7500 Karlsruhe(DE)**

## Beschreibung

Die Erfindung bezieht sich auf einen pneumatischen Zweischichtdetektor für nichtdispersive Infrarot-(NDIR)-Gasanalysatoren gemäß Oberbegriff des Anspruchs 1.

Derartige Zweischicht-Detektoren, wie sie z.B. aus der DE-A 1 017 385 bekannt sind, enthalten in zwei Kammern die in dem Meßgas, einem Gasgemisch verschiedener Gase, zu bestimmende Komponente in reiner Form oder gemischt mit einem nichtabsorbierenden Gas.

Die Infrarotstrahlung erzeugt nach ihrem Durchtritt durch das Meßgas in den beiden hintereinanderliegenden Kammern, deren Inhalte die erste und zweite Gasschicht bilden, eine absorptionsbedingte Drucksteigerung unterschiedlicher Höhe.

In der Gasschicht der ersten Kammer wird die Strahlung der Bandenmitte und der Flanken einer Absorptionsbande absorbiert, während in der Gasschicht der zweiten Kammer im wesentlichen die Bandenflanken absorbiert werden. Die in der ersten und zweiten Kammer entstehenden absorptionsbedingten Drucksignale werden gegeneinandergeschaltet, das Differenzsignal ist das Meßsignal.

Dadurch wird erreicht, daß die von überlappenden Absorptionsbanden anderer Gasanteile im Meßgas hervorgerufene Querempfindlichkeit stark vermindert bzw. zum Verschwinden gebracht wird. Die Selektivität der Messung läßt sich dadurch erheblich steigern. Dies gilt aber nur, wenn die Länge der beiden Kammern im Detektor so aufeinander abgestimmt ist, daß in beiden etwa die gleiche Banden-Randstrahlung absorbiert wird. Da dies je nach Art und Absorptionsvermögen der beteiligten Gase sehr unterschiedlich sein kann, ist eine sich mit der Meßaufgabe ändernde Einstellung der Absorptionsverhältnisse in den beiden Kammern nicht zu umgehen.

Da dies relativ aufwendig ist, besteht die Aufgabe, einfache, die Serienfertigung derartiger Detektoren erleichternde Mittel vorzusehen.

Eine Lösung dieser Aufgabe wird mit einem pneumatischen Detektor erreicht, der die Merkmale des Anspruchs 1 aufweist.

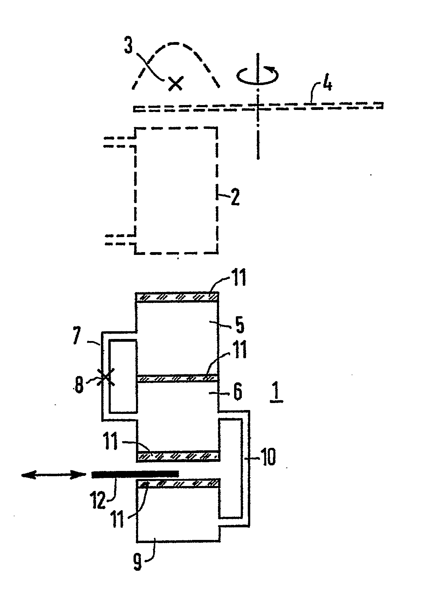

Zur Erläuterung ist in der Figur ein Ausführungsbeispiel dargestellt und im folgenden beschrieben.

Der neuerungsgemäße Detektor ist Teil eines nicht-dispersiven Infrarot-(NDIR)-Gasanalysators, dessen wesentliche Teile gestrichelt dargestellt sind.

Das zu untersuchende Gasgemisch befindet sich in einer Küvette 2 im Strahlengang einer Infrarot-Strahlungsquelle 3, der von einem rotierenden Strahlunterbrecher 4 periodisch unterbrochen wird.

Der pneumatische Detektor 1 ist als sogenannter Zweischicht-Detektor ausgebildet, er besteht aus einer ersten Kammer 5 und einer koaxial dahinter angeordneten zweiten Kammer 6, die mit einem das nachzuweisende Gas, z. B. CO, enthalten den Gasgemisch gefüllt sind.

Die beiden hintereinanderliegenden Kammern 5 und 6 sind über eine Leitung 7 verbunden, in welcher ein druck- oder strömungsempfindlicher pneumatischelektrischer Wandler 8, beispielsweise ein Kondensatormikrofon oder ein Strömungsfühler nach dem Hitzdraht-Anemometer-Prinzip angeordnet ist.

Im Strahlengang hinter der zweiten Kammer 6 ist eine dritte Kammer 9 angeordnet, die mit der zweiten Kammer 6 über eine Leitung 10 gasleitend verbunden ist. Die Stirnflächen aller drei Kammern sind als strahlungsdurchlässige Fenster 11 ausgebildet.

Zwischen dem rückwärtigen Fenster 11 der zweiten Kammer 6 und dem Eintrittsfenster 11 der dritten Kammer 9 ist eine verstellbare Blende 12 angebracht, die eine strahlungsabsorbierende Oberfläche besitzt, und mit Hilfe derer die in die dritte Kammer 9 fallende Strahlung verringert werden kann.

Damit läßt sich erreichen, daß die in der ersten Kammer 5 und die in den Kammern 6 und 9 spezifische absorbierte Banden-Randstrahlung etwa gleich ist. Eine Überkompensation (negative Querempfindlichkeit) läßt sich so vermeiden.

Die Höhe der zweiten und dritten Kammer 6, 9, deren Inhalt zusammen die zweite Empfängerschicht bildet, ist so zu bemessen, daß ihre Summe größer ist als die Höhe der ersten Kammer 5 und damit der ersten Empfängerschicht.

## Patentansprüche

1. Pneumatischer Zweischicht-Detektor für NDIR-Gasanalysatoren mit zwei koaxial hintereinander angeordneten, selektiv absorbierenden Gasschichten in mit strahlungsdurchlässigen Stirnflächen (11) versehenen Kammern (5, 6, 9), wobei die erste Gasschicht über eine einen druck- oder strömungsempfindlichen, pneumatisch-elektrischen Wandler (8) enthaltende Leitung (7) mit der zweiten Gasschicht in Verbindung steht, dadurch gekennzeichnet, daß die zweite Gasschicht in zwei koaxial angeordneten, gasleitend verbundenen Kammern (6, 9) enthalten ist, und daß zwischen den einander zugekehrten strahlungsdurchlässigen Stirnflächen (11) der die zweite Gasschicht enthaltenden Kammern (6, 9) eine verstellbare Blende (12) angeordnet ist.

2. Pneumatischer Detektor nach Anspruch 1, dadurch gekennzeichnet, daß die Summe der Höhen der die zweite Gasschicht enthaltenden Kammern (6, 9) größer ist als die Höhe der die erste Gasschicht enthaltenden Kammer (5).

3. Pneumatischer Detektor nach Anspruch 1, dadurch gekennzeichnet, daß die Blende (12) eine strahlungsabsorbierende Oberfläche aufweist.

## Claims

1. Pneumatic double-layer detector for NDIR-gas analyzers with two selectively absorbing gas layers, arranged coaxially one behind the other, in chambers (5, 6, 9) provided with radiation-permeable front faces (11), the first gas layer being connected to the second gas layer via a line (7) containing a pressure- or flow-sensitive pneumatic-electrical transformer (8), characterised in that the second gas layer is contained in two chambers (6, 9) arranged coaxially and connected gas-conductively, and in that there is arranged between the radi-

ation-permeable faces (11), facing one another, of the chambers (6, 9) containing the second gas layer an adjustable diaphragm (12).

2. Pneumatic detector according to claim 1, characterised in that the sum of the heights of the chambers (6, 9) containing the second gas layer is greater than the height of the chamber (5) containing the first gas layer.

3. Pneumatic detector according to claim 1, characterised in that the diaphragm (12) has a surface which absorbs radiation.

**Revendications**

1. Détecteur pneumatique à deux couches pour analyseurs de gaz infrarouges non dispersifs (NDIR), comprenant deux couches de gaz absorbant sélectivement et disposées coaxialement l'une derrière l'autre dans des chambres (5, 6, 9) munies de surfaces frontales (11) transparentes au rayonnement, la première couche de gaz communiquant avec la seconde couche de gaz par un conduit (7) contenant un transducteur pneumo-électrique (8) sensible à la pression ou à l'écoulement, caractérisé en ce que la seconde couche de gaz est contenue dans deux chambres (6, 9) disposées coaxialement et ayant une communication pour le gaz et en ce que entre les surfaces frontales (11) des chambres (6, 9) contenant la seconde couche de gaz, qui sont transparentes au rayonnement et qui sont tournées l'une vers l'autre, est monté un diaphragme (12) réglable.

2. Détecteur pneumatique selon la revendication 1, caractérisé en ce que la somme des hauteurs des chambres (6, 9) contenant la seconde couche de gaz est supérieure à la hauteur de la chambre (5) contenant la première couche de gaz.

3. Détecteur pneumatique selon la revendication 1, caractérisé en ce que le diaphragme (12) a une surface absorbant le rayonnement.